# NEUE EUROPÄISCHE PATENTSCHRIFT

(11) **EP 0 386 638 B2**
(45) Veröffentlichungstag und Bekanntmachung des Hinweises auf die Entscheidung über den Einspruch: **03.12.2003**
(45) Hinweis auf die Patenterteilung: 17.03.1993
(21) Anmeldenummer: 90104027.9
(22) Anmeldetag: 01.03.1990
(51) Int. Cl.: C09K 7/06

(54) **Verwendung ausgewählter Esteröle niederer Carbonsäuren in Bohrspülungen**
Use of selected lower carboxylic-acid ester oils in drilling fluids
Utilisation d'huiles d'esters sélectionnées, d'acides carboxyliques inférieurs dans des fluides de forage

(30) Priorität: 08.03.1989 DE 3907391
(43) Veröffentlichungstag der Anmeldung: 12.09.1990
(73) Patentinhaber: Cognis Deutschland GmbH & Co. KG, 40589 Düsseldorf (DE)
(72) Erfinder: Müller, Heinz, D-4019 Monheim (DE); Herold, Claus-Peter, Dr., D-4020 Mettmann (DE); von Tapavicza, Stephan, Dr., D-4006 Erkrath 2 (DE); Neuss, Michael, Dr., D-5000 Köln 50 (DE); Burbach, Frank, D-4005 Meerbusch 1 (DE)

(56) Entgegenhaltungen:
- EP-A- 0 009 746
- US-A- 3 728 277
- US-A- 4 481 121
- J.L.Lummus, Drilling Fluids Optimization - A Practical Fiel Approach,1986, Seiten 201-229
- C.-P. Herold et al, Henkel KGaA, o.J., Mineral oil free oil-based drilling fluids - Developments and Outlook.
- Vortrags-Forum "Hole Stability", Aberdeen 15. September 1988
- C.-P. Herold et al, Henkel KGaA, Speciality Chemicals in the Oil Industry - General Aspects and some Recent Developments, März 1987.

## Beschreibung

Die Erfindung beschreibt neue Bohrspülflüssigkeiten auf Basis von Esterölen und darauf aufgebaute Invert-Bohrspülschlämme, die sich durch hohe ökologische Verträglichkeit bei gleichzeitig guten Stand- und Gebrauchseigenschaften auszeichnen. Ein wichtiges Einsatzgebiet für die neuen Bohrspülsysteme sind offshore-Bohrungen zur Erschließung von Erdöl- und/oder Erdgasvorkommen, wobei es hier die Erfindung insbesondere darauf abstellt, technisch brauchbare Bohrspülungen mit hoher ökologischer Verträglichkeit zur Verfügung zu stellen. Der Einsatz der neuen Bohrspülsysteme hat besondere Bedeutung im marinen Bereich, ist aber nicht darauf eingeschränkt. Die neuen Spülsysteme können ganz allgemeine Verwendung auch bei landgestützten Bohrungen finden, beispielsweise beim Geothermiebohren, beim Wasserbohren, bei der Durchführung geowissenschaftlicher Bohrungen und bei Bohrungen im Bergbaubereich. Grundsätzlich gilt auch hier, daß durch die erfindungsgemäß ausgewählten Bohrölflüssigkeiten auf Esterbasis der ökotoxische Problembereich substantiell vereinfacht wird.

Bohrspülungen auf Ölbasis werden im allgemeinen als sogenannte Invert-Emulsionsschlämme eingesetzt, die aus einem Dreiphasensystem bestehen: Öl, Wasser und feinteilige Feststoffe. Es handelt sich dabei um Zubereitungen vom Typ der W/O-Emulsionen, d. h. die wäßrige Phase ist heterogen fein-dispers in der geschlossenen Ölphase verteilt. Zur Stabilisierung des Gesamtsystems und zur Einstellung der gewünschten Gebrauchseigenschaften ist eine Mehrzahl von Zusatzstoffen vorgesehen, insbesondere Emulgatoren bzw. Emulgatorsysteme, Beschwerungsmittel, fluid-loss-Additive, Alkalireserven, Viskositätsregler und dergleichen. Zu Einzelheiten wird beispielsweise verwiesen auf die Veröffentlichung P. A. Boyd et al. "New Base Oil Used in Low-Toxicity Oil Muds" Journal of Petroleum Technology, 1985, 137 bis 142 sowie R. B. Bennett "New Drilling Fluid Technology - Mineral Oil Mud" Journal of Petroleum Technology, 1984, 975 bis 981 sowie die darin zitierte Literatur.

Die einschlägige Technologie hat seit einiger Zeit die Bedeutung von Ölphasen auf Esterbasis zur Minderung der durch solche Ölspülungen ausgelösten Problematik erkannt. So beschreiben die US-Patentschriften 4,374,737 und 4,481,121 ölbasierte Bohrspülflüssigkeiten, in denen nonpolluting oils Verwendung finden sollen. Als nonpolluting oils werden nebeneinanderund gleichwertig aromatenfreie Mineralölfraktionen und Pflanzenöle von der Art Erdnußöl, Sojabohnenöl, Leinsamenöl, Maisöl, Relsöl oder auch Öle tierischen Ursprungs wie Walöl genannt. Durchweg handelt es sich bei den hier genannten Esterölen pflanzlichen und tierischen Ursprungs um Triglyceride natürlicher Fettsäuren, die bekanntlich eine hohe Umweltverträglichkeit besitzen und gegenüber Kohlenwasserstofffraktionen - auch wenn diese aromatenfrei sind - aus ökologischen Überlegungen deutliche Überlegenheit besitzen.

Interessanterweise schildert dann aber kein Beispiel der genannten US-Patentschriften die Verwendung solcher natürlicher Esteröle in Invert-Bohrspülungen der hier betroffenen Art. Durchweg werden Mineralölfraktionen als geschlossene Ölphase eingesetzt. Öle pflanzlichen und/oder tierischen Ursprungs kommen aus praktischen Gründen nicht in Betracht. Die rheologischen Eigenschaften solcher Ölphasen sind für den breiten in der Praxis geforderten Temperaturbereich von 0 bis 5 °C einerseits sowie bis zu 250 °C und darüber andererseits nicht in den Griff zu bekommen.

Mitte der 80er Jahre wurde innerhalb der hier betroffenen Industriekreise auch über den möglichen Einsatz von Decyl- und Tridecylacetatestern als Ersatz für Mineralöle für Invert-Bohrspülmittel diskutiert. Dabei wurde allerdings darauf verwiesen, dass derartige Ester nur dann in Bohrspülmitteln eingesetzt werden könnten, wenn der pH-Wert der Mittel den Wert 10 nicht überschreitet, um eine mögliche Hydrolyse der Ester zu vermeiden.

Esteröle der hier betroffenen Art verhalten sich tatsächlich im Einsatz nicht gleich wie die bisher verwendeten Mineralölfraktionen auf reiner Kohlenwasserstoffbasis. Esteröle unterliegen im praktischen Einsatz auch und gerade in W/O-Invert-Bohrspülschlämmen einer partiellen Hydrolyse. Hierdurch werden freie Carbonsäuren gebildet. Die älteren Anmeldungen P 38 42 659.5 und P 38 42 703.6 (D 8523 "Verwendung ausgewählter Esteröle in Bohrspülungen (I)" sowie D 8524 "Verwendung ausgewählter Esteröle in Bohrspülungen (II)") beschreiben die dadurch ausgelösten Probleme und geben Vorschläge zu ihrer Lösung.

Gegenstand dieserälteren Anmeldungen ist die Verwendung von Esterölen auf Basis jeweils ausgewählter Monocarbonsäuren bzw. Monocarbonsäuregemische und monofunktioneller Alkohole mit wenigstens 2, bevorzugt mitwenigstens 4 C-Atomen. Die älteren Anmeldungen schildern, daß mit den dort offenbarten Estern bzw. Estergemischen monofunktioneller Reaktanten nicht nur in der frischen Bohrspülung befriedigende rheologlsche Eigenschaften eingestellt werden können, sondern daß es auch gelingt, unter Mitverwendung ausgewählter bekannter Alkalireserven in der Bohrspülung zu arbeiten und auf diese Weise unerwünschte Korrosion zurückzuhalten. Als Alkalireserve wird der Zusatz von Kalk (Calciumhydroxid bzw. lime) und/oder die Mitverwendung von Zinkoxid oder vergleichbaren Zinkverbindungen vorgesehen. Dabei ist allerdings eine zusätzliche Einschränkung zweckmäßig. Soll im praktischen Betrieb die unerwünschte Eindickung des ölbasischen Invert-Spülsystems verhindert werden, so ist die Menge des alkalisierenden Zusatzstoffes und insbesondere die Kalkmenge zu begrenzen. Der vorgesehene Höchstbetrag ist nach der Offenbarung der genannten älteren Anmeldungen bei etwa 2 lb/bbl Ölspülung angesetzt.

Die Lehre der vorliegenden Erfindung will die zuletzt geschilderte Problematik dadurch vermeiden, daß eine Klasse von Esterölen in Bohrspülungen der genannten Art eingesetzt wird, die bei der stets eintretenden begrenzten Hydrolyse des Esters unproblematische Carbonsäuren bzw. Carbonsäuresalze bildet. Die technische Verwirklichung dieses Gedankens liegt in der Auswahl an Esterölen, die auf niedere Carbonsäuren mit 1 bis 5 C-Atomen zurückgehen. Besondere Bedeutung kann hier entsprechenden Estern der Essigsäure zukommen. Den bei der partiellen Hydrolyse des Esteröls entstehenden Acetatsalzen kommt keine Emulgatoreigenschaft zu, die das W/O-System substantiell stören könnten.

Gegenstand der Erfindung ist dementsprechend in einer ersten Ausführungsform die Verwendung von bei Raumtemperatur fließfähigen und Flammpunkte oberhalb 80 °C aufweisenden Estern aus C₁₋₅-Monocarbonsäuren und ein- und/oder mehrfunktionellen Alkoholen als Ölphase oder Bestandteil der Ölphase von Invert-Bohrspülschlämmen, die für eine umweltschonende Erschließung von Erdöl- bzw. Erdgasvorkommen geeignet sind und in einer geschlossenen Ölphase eine disperse wäßrige Phase zusammen mit Emulgatoren, Beschwerungsmitteln, fluid-loss-Additiven Kalk als Alkalireserve, wobei die einzusetzende Kalkmenge auf 1 bis 2 lb/bbl (Kalk/Bohrspülung) beschränkt ist und gewünschtenfalls weiteren üblichen Zusatzstoffen enthalten.

In einer weiteren Ausführungsform betrifft die Erfindung Invert-Bohrspülungen, die für den angegebenen Zweck geeignet sind und in einer geschlossenen Ölphase eine disperse wäßrige Phase zusammen mit den genannten Zusatzstoffen enthalten, und dadurch gekennzeichnet sind, daß die Ölphase wenigstens anteilsweise aus den genannten Estern von C₁₋₅-Monocarbonsäuren mit 1- und/oder mehrfunktionellen Alkoholen besteht.

Monocarbonsäureester der erfindungsgemäß betroffenen Art können über die Auswahl der zur Veresterung eingesetzten Alkoholkomponenten in ihren Stoffeigenschaften so gesteuert werden, daß sie für den erfindungsgemäß bestimmten Gebrauch verwendbar sind. Bevorzugt werden entsprechender Ester oder Estergemische eingesetzt, die auch im Temperaturbereich von 0 bis 5 °C fließ- und pumpfähig sind. Es ist weiterhin bevorzugt, als Ölphase C₁₋₅-Monocarbonsäureester oder deren Abmischungen mit ökologisch verträglichen Komponenten aus der Klasse der sogenannten nonpolluting oils zu verwenden, die im Temperaturbereich von 0 bis 5 °C eine Brookfield(RVT)-Viskosität nicht oberhalb 50 mPas und vorzugsweise nicht oberhalb 40 mPas aufweisen. Bevorzugt liegt der angegebene Viskositätswert der Ölphase bei höchstens etwa 30 mpas.

Die im Bohrschlamm der Erfindung eingesetzten C₁₋₅-Carbonsäureester besitzen dabei zweckmäßigerweise Erstarrungswerte (Fließ- und Stockpunkt) unterhalb 0 °C, vorzugsweise unterhalb - 5 °C und insbesondere unterhalb - 10 °C. Gleichzeitig sollen insbesondere aus Sicherheitsgründen die Flammpunkte dieser Ester möglichst hoch gewählt werden, so daß bevorzugte Grenzzahlen für den Flammpunkt bei etwa 90 °C und vorzugsweise oberhalb 100 °C liegen.

Die erfindungsgemäß geeigneten Ester der niederen Carbonsäuren lassen sich in zwei Unterklassen unterscheiden. In einer ersten Klasse liegen die niederen Monocarbonsäuren als Umsetzungsprodukte monofunktioneller Alkohole vor. In diesem Fall beträgt die C-Zahl des Alkohols wenigstens 6, liegt jedoch vorzugsweise höher, und zwar bei wenigstens 8 bis 10 C-Atomen. Die zweite Unterklasse der hier betroffenen Esteröle setzt mehrfunktionelle Alkohole als Ester-bildende Komponente ein. In Betracht kommen hier insbesondere 2- bis 4wertige Alkohole, wobei niedere Alkohole dieser Art mit vorzugsweise 2 bis 6 C-Atomen besonders geeignet sind. Typische Beispiele für solche mehrwertigen Alkohole sind Glycol und/oder Propandiole. Sowohl dem Ethylenglycol als auch dem 1,2-Propandiol und/oder dem 1,3-Propandiol kommen besondere Bedeutung zu. Bevorzugt sind im hier beschriebenen Fall der Ester mehrwertiger Alkohole vollveresterte Reaktionsprodukte, wenn auch die Erfindunginsbesondere im Falle der höherwertigen mehrfunktionellen Alkohole - nicht darauf beschränkt ist. Insbesondere im zuletzt genannten Fall kann auch der Einsatz von Partialestern solcher höherwertiger mehrfunktioneller Alkohole mit den genannten niederen Carbonsäuren in Betracht kommen.

Die wichtigsten Ester für die Lehre der Erfindung leiten sich von Monocarbonsäuren mit 2 bis 4 C-Atomen ab, wobei der bereits genannten Essigsäure als Ester-bildender Bestandteil herausragende Bedeutung zukommt.

Ein wichtiger Gedanke für die Auswahl der jeweiligen Alkohole geht auf die folgenden zusätzlichen Überlegungen zurück: Beim praktischen Einsatz des Esteröls ist die partielle Verseifung des Esters in der Regel nicht auszuschließen. Neben den dabei entstehenden freien Carbonsäuren bzw. zusammen mit der Alkalireserve sich bildenden Carbonsäuresalzen entstehen die freien Alkohole. Ihre Auswahl soll so getroffen werden, daß auch nach einer partiellen Hydrolyse ökologisch und toxikologisch unbedenkliche Arbeitsbedingungen sichergestellt sind, wobei hier insbesondere auch das Gebiet der inhalations-toxikologischen Überlegungen zu berücksichtigen ist. Die zur Esterbildung eingesetzten Alkohole sollen insbesondere eine so geringe Flüchtigkeit besitzen, daß sie im freien Zustand unter den in der Praxis zu erwartenden Arbeitsbedingungen zu keinen Belästigungen auf der Arbeitsplattform führen. Für die erfindungsgemäß gewählte Klasse der Esteröle auf Basis sehr kurzkettiger Monocarbonsäuren ergibt sich von vorneherein die Notwendigkeit, vergleichsweise langkettige monofunktionelle Alkohole einzusetzen, um zur hinreichenden Absenkung der Flüchtigkeit des Esteröles zu kommen. Wichtig sind die hier diskutierten Überlegungen deswegen insbesondere in den Fällen, in denen Esteröle der erfindungsgemäß def inierten Art im Verschnitt mit anderen Mischungskomponenten, insbesondere anderen Carbonsäureestern zum Einsatz kommen. Die Erfindung stellt es insgesamt in der bevorzugten Ausführungsform darauf ab, daß auch nach einer partiellen Hydrolyse im Einsatz die Bohrspülungen ökologisch und toxikologisch - hier insbesondere unter Arbeitsbedingungen inhalations-toxikologisch - unbedenklich sind.

Geeignete Alkohole, insbesondere geeignete monofunktionelle Alkohole können natürlichen und/oder synthetischen Ursprungs sein. Es können dabei geradkettige und/oder verzweigtkettige Alkohole eingesetzt werden. Die Kettenlänge beim vorliegend überwiegend aliphatisch gesättigten Alkohol liegt bevorzugt im Bereich von C₈₋₁₅. Geeignet sind allerdings auch 1- und/oder mehrfach olefinisch ungesättigte Alkohole wie sie beispielsweise durch selektive Reduktion natürlich anfallender ungesättigter Fettsäuren bzw. Fettsäuregemische erhalten werden können. Derart 1 - und/oder mehrfach olefinisch ungesättigte Alkohole können in den erfindungsgemäßen Esterölen dann auch höhere C-Zahlen erreichen und beispielsweise bis etwa C₂₄ liegen.

Esteröle der hier genannten Art können die geschlossene Ölphase der W/O-Invert-Spülung als Ganzes bilden. Andererseits fällt in den Rahmen der Erfindung technisches Handeln, bei dem die erfindungsgemäß definierten Carbonsäureester nur einen Mischungsbestandteil der Ölphase ausmachen. Als weitere Ölkomponenten sind praktisch beliebige vorbekannte und/oder vorbeschriebene Ölkomponenten des hier betroffenen Anwendungsgebietes geeignet. Im nachfolgenden wird auf besonders geeignete Mischungskomponenten noch eingegangen.

Die erfindungsgemäß vorgesehenen Esteröle sind mit den Mischungskomponenten in der Regel in beliebigen Mischungsverhältnissen homogen mischbar. Zweckmäßigerweise liegen im Rahmen des erfindungsgemäßen Handelns wenigstens etwa 25 % und insbesondere wenigstens etwa ein Drittel der Ölphase in Form der C₁₋₅-Esteröle vor. In wichtigen Ausführungsformen der Erfindung bilden diese Esteröle den Hauptanteil der Ölphase.

### Mischungskomponenten in der Ölphase

Zur Abmischung mit den Monocarbonsäureestern der Erfindung geeignete Ölkomponenten sind die in der heutigen Praxis der Bohrspülungen eingesetzten Mineralöle und dabei bevorzugt im wesentlichen aromatenfreie aliphatische und/oder cycloaliphatische Kohlenwasserstofffraktionen der geforderten Fließeigenschaften. Auf den einschlägigen druckschriftlichen Stand der Technik und die auf dem Markt befindlichen Handelsprodukte wird verwiesen.

Besonders wichtige Mischungskomponenten sind allerdings im Sinne des erfindungsgemäßen Handelns umweltverträgliche Esteröle wie sie insbesondere in den genannten älteren Anmeldungen ... (D 8523 und D 8524) geschildert sind. Zur Vervollständigung der Erfindungsoffenbarung werden im nachfolgenden wesentliche Kenndaten solcher Ester bzw. Estergemische kurz zusammengefaßt.

In einer ersten Ausführungsform werden im Temperaturbereich von 0 bis 5 °C fließ- und pumpfähige Ester aus monofunktionellen Alkoholen mit 2 bis 12, insbesondere mit6 bis 12 C-Atomen und aliphatisch gesättigten Monocarbonsäuren mit 12 bis 16 C-Atomen oder deren Abmischung mit höchstens etwa gleichen Mengen anderer Monocarbonsäuren als Ölphase verwendet. Bevorzugt sind dabei Esteröle, die zu wenigstens etwa 60 Gew.-% - bezogen auf das jeweilige Carbonsäuregemisch - Ester aliphatischer C₁₂₋₁₄-Monocarbonsäuren sind und gewünschtenfalls zum Rest auf untergeordnete Mengen kürzerkettiger aliphatischer und/oder längerkettiger, dann insbesondere 1 - und/oder mehrfach olefinisch ungesättigter Monocarbonsäuren zurückgehen. Bevorzugt werden Ester eingesetzt, die im Temperaturbereich von 0 bis 5 °C eine Brookfield(RVT)-Viskosität im Bereich nicht oberhalb 50 mPas, vorzugsweise nicht oberhalb 40 mPas und insbesondere von höchstens etwa 30 mPas besitzen. Die im Bohrschlamm eingesetzten Ester zeigen Erstarrungswerte (Fließ- und Stockpunkt) unterhalb - 10 °C, vorzugsweise unterhalb - 15 °C und besitzen dabei insbesondere Flammpunkte oberhalb 100 °C, vorzugsweise oberhalb 150 °C. Die im Ester bzw. Estergemisch vorliegenden Carbonsäuren sind geradkettig und/oder verzweigt und dabei pflanzlichen und/oder synthetischen Ursprungs. Sie können sich von entsprechenden Triglyceriden wie Kokosöl, Palmkernöl und/oder Babassuöl ableiten. Die Alkoholreste dereingesetzten Ester leiten sich insbesondere von geradkettigen und/oder verzweigten gesättigten Alkoholen mit vorzugsweise 6 bis 10 C-Atomen ab. Auch diese Alkoholkomponenten können pflanzlichen und/odertierischen Ursprungs und dabei durch reduktive Hydrierung entsprechender Carbonsäureester gewonnen worden sein.

Eine weitere Klasse besonders geeigneter Esteröle leitet sich von olefinisch 1- und/oder mehrfach ungesättigten Monocarbonsäuren mit 16 bis 24 C-Atomen oder deren Abmischungen mit untergeordneten Mengen anderer, insbesondere gesättigter Monocarbonsäuren und monofunktionellen Alkoholen mit bevorzugt 6 bis 12 C-Atomen ab. Auch diese Esteröle sind im Temperaturbereich von 0 bis 5 °C fließ- und pumpfähig. Geeignet sind insbesondere Ester dieser Art, die sich zu mehr als 70 Gew.-%, vorzugsweise zu mehr 80 Gew.-% und insbesondere zu mehr als 90 Gew.-% von olef inisch ungesättigten Carbonsäuren des Bereichs von C₁₆₋₂₄ ableiten.

Auch hier liegen die Erstarrungswerte (Fließ- und Stockpunkt) unter halb - 10 °C, vorzugsweise unterhalb - 15 °C, während die Flammpunkte oberhalb 100 °C und vorzugsweise oberhalb 160 °C liegen. Die im Bohrschlamm eingesetzten Ester zeigen im Temperaturbereich von 0 bis 5 °C eine Brookfield( RVT)-Viskosität von nicht mehr als 55 mPas, vorzugsweise von nicht mehr als 45 mPas.

Bei Esterölen der hier betroffenen Art lassen sich zwei Unterklassen definieren. In der ersten leiten sich die im Ester vorliegenden ungesättigten C₁₆₋₂₄-Monocarbonsäurereste zu nicht mehr als 35 Gew.-% von 2-und mehrfach olefinisch ungesättigten Säuren ab, wobei bevorzugt wenigstens etwa 60 Gew.-% der Säurereste einfach olefinisch ungesättigt sind. In der zweiten Ausführungsform leiten sich die im Estergemisch vorliegenden C₁₆₋₂₄-Monocarbonsäuren zu mehr als 45 Gew.-%, vorzugsweise zu mehr als 55 Gew.-% von 2-und/oder mehrfach olefinisch ungesättigten Säuren ab. Im Estergemisch vorliegende gesättigte Carbonsäuren des Bereiches C_{16/18} machen zweckmäßigerweise nicht mehr als etwa 20 Gew.-% und insbesondere nicht mehr als etwa 10 Gew.-% aus. Bevorzugt liegen gesättigte Carbonsäureester aber im Bereich niedrigerer C-Zahlen der Säurereste. Die vorliegenden Carbonsäurereste können pflanzlichen und/oder tierischen Ursprungs sein. Pflanzliche Ausgangsmaterialien sind beispielsweise Palmöl, Erdnußöl, Rizinusöl und insbesondere Rüböl. Carbonsäuren tierischen Ursprungs sind insbesondere entsprechende Gemische aus Fischölen wie Heringsöl.

Geeignete Mischungskomponenten sind schließlich aber die in der parallelen Anmeldung ... (D8607 "Ester von Carbonsäuren mittlerer Kettenlänge als Bestandteil der Ölphase in Invert-Bohrspülschlämmen") beschriebenen Ester aus Monocarbonsäuren synthetischen und/oder natürlichen Ursprungs mit 6 bis 11 C-Atomen und 1 - und/oder mehrfunktionellen Alkoholen, die bevorzugt auch im Temperaturbereich von 0 bis 5 °C fließ- und pumpfähig sind. Zur Vervollständigung der Erfindungsoffenbarung wird insoweit auf die genannte Parallelanmeldung verwiesen, deren Inhalt hiermit zum Gegenstand auch der vorliegenden Offenbarung gemacht wird.

### Weitere Mischungskomponenten der Invert-Bohrspülung

In Betracht kommen hieralle üblichen Mischungsbestandteile zur Konditionierung und für den praktischen Einsatz der Invert-Bohrspülschlämme, wie sie nach der heutigen Praxis mit Mineralölen als geschlossene Ölphase zur Verwendung kommen. Neben der dispersen wäßrigen Phase kommen hier insbesondere Emulgatoren, Beschwerungsmittel, fluid-loss-Additive, Viskositätsbildner und Alkalireserven in Betracht.

In einer besonders wichtigen Ausführungsform der Erfindung wird auch hier Gebrauch gemacht von der Weiterentwicklung solcher Invert-Bohrspülungen auf Esterölbasis, die Gegenstand der älteren Anmeldung ... (D 8543 "Olephile basische Aminverbindungen als Additiv in Invert-Bohrspülschlämmen") der Anmelderin ist.

Die Lehre dieser älteren Anmeldung geht von dem Konzept aus, in Invert-Bohrspülungen auf Basis von Esterölen ein zusätzliches Additiv mitzuverwenden, das geeignet ist, die erwünschten rheologischen Daten der Bohrspülung im geforderten Bereich auch dann zu halten, wenn im Gebrauch zunehmend größere Mengen an freien Carbonsäuren durch partielle Esterhydrolyse gebildet werden. Diese freiwerdenden Carbonsäuren sollen nicht nur in einer unschädlichen Form abgefangen werden, es soll darüber hinaus möglich sein, diese freien Carbonsäuren gewünschtenfalls zu wertvollen Komponenten mit stabilisierenden bzw. emulgierenden Eigenschaften für das Gesamtsystem umzuwandeln. Vorgesehen ist nach dieser Lehre die Mitverwendung von basischen und zur Salzbildung mit Carbonsäuren befähigten Aminverbindungen ausgeprägt oleophiler Natur und höchstens beschränkter Wasserlöslichkeit als Additiv in der Ölphase. Die oleophilen Aminverbindungen können gleichzeitig wenigstens anteilsweise als Alkalireserve der Invert-Bohrspülung Verwendung finden, sie können aber auch in Kombination mit konventionellen Alkalireserven, insbesondere zusammen mit Kalk eingesetzt werden. Bevorzugt ist die Verwendung von oleophilen Aminverbindungen, die wenigstens überwiegend frei sind von aromatischen Bestandteilen. In Betracht kommen insbesondere gegebenenfalls olefinisch ungesättigte aliphatische, cycloaliphatische und/oder heterocyclische oleophile basische Aminverbindungen, die eine oder auch mehrere mit Carbonsäuren zur Salzbildung befähigte N-Gruppierungen enthalten. Die Wasserlöslichkeit bei Raumtemperatur dieser Aminverbindungen beträgt in einer bevorzugten Ausführungsform höchstens etwa 5 Gew.-% und liegt zweckmäßigerweise unter 1 Gew.-%.

Typische Beispiele für solche Aminverbindungen sind wenigstens weitgehend wasserunlösliche primäre, sekundäre und/oder tertiäre Amine, die auch beschränkt alkoxyliert und/oder mit insbesondere Hydroxylgruppen substituiert sein können. Weitere Beispiele sind entsprechende Aminoamide und/oder Stickstoff als Ringbestandteil enthaltende Heterocyclen. Geeignet sind beispielsweise basische Aminverbindungen, die wenigstens einen langkettigen Kohlenwasserstoffrest mit bevorzugt 8 bis 36 C-Atomen, insbesondere mit 10 bis 24 C-Atomen aufweisen, der auch 1- oder mehrfach olefinisch ungesättigt sein kann. Die oleophilen basischen Aminverbindungen können der Bohrspülung in Mengen bis zu etwa 10 lb/bbl, vorzugsweise in Mengen bis zu etwa 5 lb/bbl und insbesondere im Bereich von etwa 0,1 bis 2 lb/bbl zugesetzt werden.

Es hat sich gezeigt, daß die Mitverwendung solcher oleophiler basischer Aminverbindungen Verdickungen des Spülsystems wirkungsvoll verhindern kann, die vermutlich auf eine Störung des W/O-Invertsystems zurückzuführen und auf die Entstehung freier Carbonsäuren durch Esterhydrolyse zurückzuführen sind.

Werden im Rahmen der erfindungsgemäßen Lehre Ester längerkettiger Carbonsäuren als Mischungskomponenten mitverwendet, die bei der hydrolytischen Spaltung zu Fettsäuren bzw. Fettsäuresalzen mit ausgeprägter O/W-Emulgierwirkung führen, dann sind auch im erfindungsgemäßen Handeln die Maßnahmen bezüglich derAlkalireserve zu berücksichtigen, die im einzelnen in den eingangs genannten älterenAnmeldungen P 38 42 659.5 und P 38 42 703.6 zu diesem Problemkreis beschrieben sind. Für den Fall solcher Estermischungen gilt dann das folgende:

In einer bevorzugten Ausführungsform des erfindungsgemäßen Handelns wird darauf geachtet, in der Ölspülung keine wesentlichen Mengen stark hydrophiler Basen anorganischer und/oder organischer Art mitzuverwenden. Insbesondere verzichtet die Erfindung auf die Mitverwendung von Alkalihydroxiden oder stark hydrophilen Aminen von der Art des Diethanolamins und/oder des Triethanolamins. Kalk wird wirkungsvoll als Alkalireserve mitverwendet. Es ist zweckmäßig, die maximal einzusetzende Kalkmenge mit etwa 2 lb/bbl zu beschränken, wobei es bevorzugt sein kann, mit Bohrschlammbeladungen an Kalk zu arbeiten, die leicht darunter liegen, beispielsweise also im Bereich von etwa 1 bis 1,8 lb/bbl (Kalk/Bohrspülung) liegen. Neben oder anstelle des Kalks können andere Alkalireserven bekannter Art zum Einsatz kommen. Genanntseien hier insbesondere die weniger basischen Metalloxide von der Art des Zinkoxids. Auch bei dem Einsatz solcher Säurefänger wird allerdings darauf geachtet werden, keine zu großen Mengen einzusetzen, um eine unerwünschte vorzeitige Alterung der Bohrspülung - verbunden mit einem Viskositätsanstieg und damit Verschlechterung der rheologischen Eigenschaften - zu verhindern. Durch die hier diskutierte Besonderheit des erfindungsgemäßen Handelns wird das Entstehen unerwünschter Mengen an hoch wirksamen O/W-Emulgatoren verhindert oder wenigstens so eingeschränkt, daß die guten rheologischen Einsatzwerte auch bei der thermischen Alterung im Betrieb für hinreichend lange Zeit aufrechterhalten bleiben.

### Weiterhin gilt das folgende:

Invert-Bohrspülschlämme der hier betroffenen Art enthalten üblicherweise zusammen mit der geschlossenen Ölphase die feindisperse wäßrige Phase in Mengen von etwa 5 bis 45 Gew.-% und vorzugsweise in Mengen von etwa 5 bis 25 Gew.-%. Dem Bereich von etwa 10 bis 25 Gew.-% an disperser wäßriger Phase kann besondere Bedeutung zukommen.

Für die Rheologie bevorzugter Invert-Bohrspülungen im Sinne der Erfindung gelten die folgenden rheologischen Daten: Plastische Viskosität (PV) im Bereich von etwa 10 bis 60 mPas, bevorzugt von etwa 15 bis 40 mPas, Fließgrenze (Yield Point YP) im Bereich von etwa 5 bis 40 lb/100 ft², bevorzugt von etwa 10 bis 25 lb/100 ft² - jeweils bestimmt bei 50 °C. Für die Bestimmung dieser Parameter, für die dabei eingesetzten Meßmethoden sowie für die im übrigen übliche Zusammensetzung der hier beschriebenen Invert-Bohrspülungen gelten im einzelnen die Angaben des Standes der Technik, die eingangs zitiert wurden und ausführlich beispielsweise beschrieben sind in dem Handbuch "Manual Of Drilling Fluids Technology" der Firma NL-Baroid, London, GB, dort insbesondere unter Kapitel "Mud Testing - Tools and Techniques" sowie "Oil Mud Technology", das der interessierten Fachweltfrei zugänglich ist. Zusammenfassend kann hier zum Zwecke der Vervollständigung der Erfindungsoffenbarung das folgende gesagt werden:

Für die Praxis brauchbare Emulgatoren sind Systeme, die zur Ausbildung der geforderten W/O-Emulsionen geeignet sind. In Betracht kommen insbesondere ausgewählte oleophile Fettsäuresalze, beispielsweise solche auf Basis von Amidoaminverbindungen. Beispiele hierfür werden in der bereits zitierten US-PS 4,374,737 und der dort zitierten Literatur beschrieben. Ein besonders geeigneter Emulgatortyp ist das von der Firma NL Baroid unter dem Handelsnamen "EZ-mul" vertriebene Produkt.

Emulgatoren der hier betroffenen Art werden im Handel als hochkonzentrierte Wirkstoffaufbereitungen vertrieben und können beispielsweise in Mengen von etwa 2,5 bis 5 Gew.-%, insbesondere in Mengen von etwa 3 bis 4 Gew.-% - jeweils bezogen auf Esterölphase - Verwendung finden.

Als fluid-loss-Additiv und damit insbesondere zur Ausbildung einer dichten Belegung der Bohrwandungen mit einem weitgehend flüssigkeitsundurchlässigen Film wird in der Praxis insbesondere hydrophobierter Lignit eingesetzt. Geeignete Mengen liegen beispielsweise im Bereich von etwa 15 bis 20 lb/bbl oder im Bereich von etwa 5 bis 7 Gew.-% - bezogen auf die Esterölphase.

In Bohrspülungen der hier betroffenen Art ist der üblicherweise eingesetzte Viskositätsbildner ein kationisch modifizierter feinteiliger Bentonit, der insbesondere in Mengen von etwa 8 bis 10 lb/bbl oder im Bereich von etwa 2 bis 4 Gew.-%, bezogen auf Esterölphase, verwendet werden kann. Das in der einschlägigen Praxis üblicherweise eingesetzte Beschwerungsmittel zur Einstellung des erforderlichen Druckausgleiches ist Baryt, dessen Zusatzmengen den jeweils zu erwartenden Bedingungen der Bohrung angepaßt wird. Es ist beispielsweise möglich, durch Zusatz von Baryt das spezifische Gewicht der Bohrspülung auf Werte im Bereich bis etwa 2,5 und vorzugsweise im Bereich von etwa 1,3 bis 1,6 zu erhöhen.

Die disperse wäßrige Phase wird in Invert-Bohrspülungen der hier betroffenen Art mit löslichen Salzen beladen. Überwiegend kommt hier Calciumchlorid und/oder Kaliumchlorid zum Einsatz, wobei die Sättigung der wäßrigen Phase bei Raumtemperatur mit dem löslichen Salz bevorzugt ist.

Die zuvor erwähnten Emulgatoren bzw. Emulgatorsysteme dienen gegebenenfalls auch dazu, die Ölbenetzbarkeit der anorganischen Beschwerungsmaterialien zu verbessern. Neben den bereits genannten Aminoamiden sind als weitere Beispiele Alkylbenzolsulfonate sowie Imidazolinverbindungen zu nenen. Zusätzliche Angaben zum einschlägigen Stand der Technik finden sich in den folgenden Literaturstellen: GB 2 158 437, EP 229 912 und DE 32 47 123.

Die erfindungsgemäß auf der Mitverwendung von Esterölen der geschilderten Art aufgebauten Bohrspülflüssigkeiten zeichnen sich zusätzlich zu den bereits geschilderten Vorteilen auch durch eine deutlich verbesserte Schmierfähigkeit aus. Wichtig ist das insbesondere dann, wenn bei Bohrungen beispielsweise in größeren Tiefen der Gang des Bohrgestänges und damit auch das Bohrloch Abweichungen von der Senkrechten aufweisen. Das rotierende Bohrgestänge kommt hier leicht mit der Bohrlochwand in Kontakt und gräbt sich im Betrieb in diese ein. Esteröle der erfindungsgemäß als Ölphase eingesetzten Art besitzen eine deutlich bessere Schmierwirkung als die bisher verwendeten Mineralöle. Hier liegt ein weiterer wichtiger Vorteil für das erfindungsgemäße Handeln.

### Beispiele

In den nachfolgenden Beispielen werden Invert-Bohrspülungen in konventioneller Weise unter Benutzung der folgenden Rahmenrezeptur hergestellt:

| | |
|---|---|
| 230 ml | Esteröl |
| 26 ml | Wasser |
| 6 g | organophiler Bentonit (Geltone II der Fa. NL Baroid) |
| 12 g | organophiler Lignit (Duratone der Fa. NL Baroid) |
| x g | Kalk (x = 1 oder 2) |
| 6 g | W/O-Emulgator (EZ-mul NTder Fa. NL Baroid) |
| 346 g | Baryt |
| 9,2 g | CaCl₂ x 2 H₂O |

In dieser Rezeptur entsprechen etwa 1,35 g Kalk dem Wert von 2 lb/bbl.

Nachdem in an sich bekannter Weise aus den jeweils eingesetzten Komponenten unter Variation der Esterölphase eine W/O-Invert-Bohrspülung zusammengestellt worden ist, werden zunächst am ungealterten und dann am gealterten Material die Viskositätskennwerte wie folgt bestimmt:

Messung der Viskosität bei 50 °C in einem Fann-35-Viskosimeter der Fa. NL Baroid. Es werden in an sich bekannter Weise bestimmt die Plastische Viskosität (PV), die Fließgrenze (YP) sowie die Gelstärke (lb/100 ft²) nach 10 sec. und 10 min.

Die Alterung erfolgt durch Behandlung im Autoklaven - im sogenannten Roller-oven - für den Zeitraum von 16 Stunden bei 125 °C.

Als Esteröl wird Isotridecylacetat mit den nachfolgenden rheologischen Kennzahlen eingesetzt: Viskosität bei 20 °C 5 mPas; Viskosität bei 50 °C 2,1 mPas; Stockpunkt unterhalb - 10 °C.

Im nachfolgenden Beispiel 1 beträgt die in der Rahmenrezeptur eingesetzte Kalkmenge 2 g, im Beispiel 2 wird diese Kalkmenge auf 1 g erniedrigt

Die jeweils am ungealterten und gealterten Material bestimmten Kennzahlen sind in den nachfolgenden tabellarischen Zusammenfassungen aufgeführt:

### Beispiel 1

| | ungealtertes Material | gealtertes Material |
|---|---|---|
| Plastische Viskosität (PV) | 31 | 33 |
| Fließgrenze (YP) | 11 | 13 |
| Gelstärke (lb/100 ft²) | | |
| 10 sec. | 6 | 7 |
| 10 min. | 9 | 9 |

### Beispiel 2

| | ungealtertes Material | gealtertes Material |
|---|---|---|
| Plastische Viskosität (PV) | 24 | 25 |
| Fließgrenze (YP) | 14 | 12 |
| Gelstärke (lb/100 ft²) | | |
| 10 sec. | 5 | 5 |
| 10 min. | 8 | 7 |

Die Rahmenrezeptur dieser Beispiele 1 und 2 entspricht im Gewichtsverhältnis Ölphase/Wasser dem Zahlenwert von 90/10. In weiteren Versuchen werden Untersuchungen unterAbwandlung des Esteröl/Wasser-Verhältnisses auf den Wert von 80/20 durchgeführt.

In diesen nachfolgenden Beispielen 3 und 4 werden Invert-Bohrspülungen unter Verwendung des Esteröles auf Basis Isotridecylacetat unter Benutzung der folgenden Rahmenrezeptur hergestellt:

| | |
|---|---|
| 210 ml | Esteröl |
| 48,2 g | Wasser |
| 6 g | organophiler Bentonit (Omnigel) |
| 13 g | organophiler Lignit (Duratone der Fa. NL Baroid) |
| 2 g | Kalk |
| 8 g | W/O-Emulgator (EZ-mul NT der Fa. NL Baroid) |
| 270 g | Baryt |
| 20 g | CaCl₂ x 2 H₂O |

Wie in den Beispielen 1 und 2 werden zunächst am ungealterten und dann am gealterten Material (16 Stunden bei 125 °C im Roller-oven) die Viskositätswerte bestimmt (Beispiel 3).

In einem weiteren Versuchsansatz (Beispiel 4) wird der angegebenen Rahmenrezeptur des Beispiels 3 ein stark oleophiles Amin in einer Menge von 2 g (Handelsprodukt "Araphen G2D" der Anmelderin - das Umsetzungsprodukt eines epoxidierten C_{12/14}-alpha-Olefins und Diethanolamin) zugesetzt. Dann werden wie oben angegeben wieder die Viskositätskennwerte zunächst am ungealterten und dann am gealterten Material bestimmt.

### Beispiel 3

| | ungealtertes Material | gealtertes Material |
|---|---|---|
| Plastische Viskosität (PV) | 34 | 36 |
| Fließgrenze (YP) | 52 | 51 |
| Celstärke (lb/100 ft²) | | |
| 10 sec. | 25 | 23 |
| 10 min. | 37 | 35 |

### Beispiel 4

| | ungealtertes Material | gealtertes Material |
|---|---|---|
| Plastische Viskosität (PV) | 31 | 34 |
| Fließgrenze (YP) | 36 | 32 |
| Gelstärke (lb/100 ft²) | | |
| 10 sec. | 14 | 13 |
| 10 min. | 17 | 15 |

### Beispiel 5

Als Esteröl wird das Estergemisch aus Essigsäure und einem C₆₋₁₀-Alkoholschnitt (Handelsprodukt "Lorol technisch" der Anmelderin), hergestellt durch Reduktion des entsprechenden Vorlauffettsäureschnittes natürlichen Ursprungs, eingesetzt. Die Rahmenrezeptur der Esterspülung entspricht der eingangs angegebenen Formulierung für das Beispiel 2).

Die Bestimmung der Viskositätsdaten und die Alterung erfolgen wie in den vorherigen Beispielen angegeben. Es werden die folgenden Viskositätswerte bestimmt.

| | ungealtertes Material | gealtertes Material |
|---|---|---|
| Plastische Viskosität (PV) | 28 | 29 |
| Fließgrenze (YP) | 17 | 20 |
| Gelstärke (lb/100 ft²) | | |
| 10 sec. | 9 | 9 |
| 10 min. | 24 | 14 |

### Beispiele 6 bis 8

In Parallelansätzen werden drei Bohrspülungen auf Basis Isotridecalacetat im Sinne der Rahmenrezeptur gemäß Beispielen 1 und 2 (Ölphase/Wasser wie 90/10) hergestellt. Wie in den vorangegangenen Beispielen werden ihre rheologischen Daten unmittelbar nach Herstellung sowie nach einer Alterung im Roller-oven bei 125 °C für den Zeitraum von 16 Stunden bestimmt.

Dabei wird in einer ersten Spülung ohne Zusatz von Kalk gearbeitet (Beispiel 6), in einer zweiten Spülung (Beispiel 7) werden 2 g Kalk zugesetzt, während in der parallelen dritten Spülung (Beispiel 8) 2 g Kalk zusammen mit 1 g des stark oleophilen Amins "Araphen G2D" eingesetzt werden.

Die jeweils bestimmten rheologischen Daten sind die folgenden:

### Beispiel 6

| | ungealtertes Material | gealtertes Material |
|---|---|---|
| Plastische Viskosität (PV) | 28 | 30 |
| Fließgrenze (YP) | 15 | 9 |
| Gelstärke (lb/100 ft²) | | |
| 10 sec. | 9 | 7 |
| 10 min. | 10 | 8 |

### Beispiel 7

| | ungealtertes Material | gealtertes Material |
|---|---|---|
| Plastische Viskosität (PV) | 30 | 29 |
| Fließgrenze (YP) | 13 | 17 |
| Gelstärke (lb/100 ft²) | | |
| 10 sec. | 8 | 8 |
| 10 min. | 10 | 12 |

### Beispiel 8

| | ungealtertes Material | gealtertes Material |
|---|---|---|
| Plastische Viskosität (PV) | 25 | 25 |
| Fließgrenze (YP) | 12 | 8 |
| Gelstärke (lb/100 ft²) | | |
| 10 sec. | 8 | 7 |
| 10 min. | 11 | 9 |

### Beispiele 9 bis 11

In einer weiteren vergleichenden Versuchsserie werden Bohrspülungen auf Basis Isotridecylacetat in der Rahmenrezeptur der Beispiele 6 bis 8 wie folgt zusammengestellt: Beispiel 9 Zusatz von 1 g Kalk; Beispiel 10 Zusatz von 2 g Kalk; Beispiel 11 Zusatz von 2 g Kalk + 1 g "Araphen G2D".

Die Alterung mit diesen Spülungen wird jetzt jedoch im Rolleroven bei 125 °C fürden Zeitraum von 72 Stunden vorgenommen. Die jeweils am nicht gealterten und gealterten Material ermittelten rheologischen Daten sind die folgenden:

### Beispiel 9

| | ungealtertes Material | gealtertes Material |
|---|---|---|
| Plastische Viskosität (PV) | 30 | 37 |
| Fließgrenze (YP) | 15 | 16 |
| Gelstärke (lb/100 ft²) | | |
| 10 sec. | 7 | 7 |
| 10 min. | 11 | 10 |

### Beispiel 10

| | ungealtertes Material | gealtertes Material |
|---|---|---|
| Plastische Viskosität (PV) | 28 | 34 |
| Fließgrenze (YP) | 16 | 13 |
| Gelstärke (lb/100 ft²) | | |
| 10 sec. | 6 | 6 |
| 10 min. | 10 | 10 |

### Beispiel 11

| | ungealtertes Material | gealtertes Material |
|---|---|---|
| Plastische Viskosität (PV) | 29 | 36 |
| Fließgrenze (YP) | 11 | 14 |
| Gelstärke (lb/100 ft²) | | |
| 10 sec. | 7 | 6 |
| 10 min. | 10 | 10 |

## Patentansprüche

1. Verwendung von bei Raumtemperatur fließfähigen und Flammpunkte oberhalb 80 °C aufweisenden Estern aus C₁₋₅-Monocarbonsäuren und ein- und/oder mehrfunktionellen Alkoholen als Ölphase oder Bestandteil der Ölphase von Invert-Bohrspülschlämmen, die für eine umweltschonende Erschließung von Erdöl- bzw. Erdgasvorkommen geeignet sind und in einer geschlossenen Ölphase eine disperse wäßrige Phase zusammen mit Emulgatoren, Beschwerungsmitteln, fluid--loss-Additiven, Kalk als Alkalireserve, wobei die einzusetzende Kalkmenge auf 1 bis 2 lb/bbl (Kalk/Bohrspülung) beschränkt ist, und gewünschtenfalls weiteren üblichen Zusatzstoffen enthalten.

2. Ausführungsform nach Anspruch 1, **dadurch gekennzeichnet, daß** Ester oder Estergemische eingesetzt werden, die auch im Temperaturbereich von 0 bis 5 °C fließ- und pumpfähig sind.

3. Ausführungsform nach Ansprüchen 1 und 2, **dadurch gekennzeichnet, daß** als Ölphase C₁₋₅-Monocarbonsäureester oder deren Abmischungen mit ökologisch verträglichen Komponenten (nonpolluting oils) verwendet werden, die im Temperaturbereich von 0 bis 5 °C eine Brookfield(RVT)-Viskosität nicht oberhalb 50 mPas, vorzugsweise nicht oberhalb 40 mPas und höchstens von etwa 30 mPas aufweisen.

4. Ausführungsform nach Ansprüchen 1 bis 3, **dadurch gekennzeichnet, daß** die im Bohrschlamm eingesetzten C₁₋₅-Carbonsäureester Erstarrungswerte (Fließ- und Stockpunkt) unterhalb 0 °C, vorzugsweise unterhalb - 5 °C und insbesondere unterhalb - 10 °C und dabei Flammpunkte nicht unter 90 °C, vorzugsweise oberhalb 100 °C aufweisen.

5. Ausführungsform nach Ansprüchen 1 bis 4, **dadurch gekennzeichnet, daß** C₁₋₅-Carbonsäureester monofunktioneller Alkohole mit wenigstens 6 C-Atomen, vorzugsweise mit wenigstens 8 C-Atomen und/oder Ester dieser Säuren mit 2- bis 4-wertigen Alkoholen mit vorzugsweise 2 bis 6 C-Atomen verwendet werden.

6. Ausführungsform nach Ansprüchen 1 bis 5, **dadurch gekennzeichnet, daß** als Ester mehrwertiger Alkohole solche des Glycols und/oder eines Propandiols zum Einsatz kommen.

7. Ausführungsform nach Ansprüchen 1 bis 6, **dadurch gekennzeichnet, daß** Ester von Monocarbonsäuren mit 2 bis 4 C-Atomen, insbesondere Essigsäureester verwendet werden.

8. Ausführungsform nach Ansprüchen 1 bis 7, **dadurch gekennzeichnet, daß** bei der Abmischung mit anderen Esterölen solche Beimischungen auf Esterbasis verwendet werden, die auch nach einer partiellen Hydrolyse im Einsatz ökologisch und toxikologisch - hier insbesondere unter Arbeitsbedingungen inhalations-toxikologisch - unbedenklich sind.

9. Ausführungsform nach Ansprüchen 1 bis 8, **dadurch gekennzeichnet, daß** mit Estern von monofunktionellen Alkoholen natürlichen und/oder synthetischen Ursprungs gearbeitet wird, deren Kettenlänge beim Vorliegen überwiegend aliphatisch gesättigter Alkohole im Bereich von C₈₋₁₅, im Falle ein- und/oder mehrfach olefinisch ungesättigter Alkohole aber auch bei höheren C-Zahlen, beispielsweise bis etwa C₂₄ liegen kann.

10. Ausführungsform nach Ansprüchen 1 bis 9, **dadurch gekennzeichnet, daß** als Mischungskomponenten auf Esterbasis in der geschlossenen Ölphase Esteröle aus monofunktionellen Alkoholen mit 2 bis 12, vorzugsweise mit 6 bis 10 C-Atomen und olefinisch 1- und/oder mehrfach ungesättigten Monocarbonsäuren mit 16 bis 24 C-Atomen vorliegen, die vorzugsweise ihrerseits bereits Erstarrungswerte (Fließ- und Stockpunkt) unterhalb - 10 °C, vorzugsweise unterhalb - 15 °C und dabei Flammpunkte oberhalb 100 °C aufweisen.

11. Ausführungsform nach Anspruch 10, **dadurch gekennzeichnet, daß** zusammen mit den Estern der niederen Carbonsäuren als Mischungskomponente olefinisch ungesättigte Carbonsäureester eingesetzt werden, die sich zu mehr als 70 Gew.-%, vorzugsweise zu mehr als 80 Gew.-% und insbesondere zu mehr als 90 Gew.-% von olefinisch ungesättigten Carbonsäuren des Bereich von C₁₆₋₂₄ ableiten und dabei insbesondere im Temperaturbereich von 0 bis 5 °C eine Brookfield(RVT)-Viskosität von nicht mehr als 55 mPas, vorzugsweise von nicht mehr als 45 mPas besitzen.

12. Ausführungsform nach Ansprüchen 10 und 11, **dadurch gekennzeichnet, daß** sich die als Mischungskomponenten eingesetzten Ester ungesättigter Monocarbonsäuren zu nicht mehr als 35 Gew.-% von 2- und mehrfach olefinisch ungesättigten Säuren, die zu wenigstens etwa 60 Gew.-% 1fach olefinisch ungesättigt sind und/oder zu mehr als 45 Gew.-%, vorzugsweise zu mehr als 55 Gew.-% von 2-und/oder mehrfach olefinisch ungesättigten Säuren ableiten.

13. Ausführungsform nach Ansprüchen 1 bis 9, **dadurch gekennzeichnet, daß** als Mischungskomponenten Ester aliphatisch gesättigter Monocarbonsäuren mit 6 bis 16 C-Atomen verwendet werden, die mit 1- und/oder mehrwertigen Alkoholen verestert sind.

14. Ausführungsform nach Ansprüchen 1 bis 13, **dadurch gekennzeichnet, daß** die Ester bzw. Estergemische in den Invert-Bohrschlämmen zusammen mit zur Salzbildung mit freien Carbonsäuren befähigten Aminverbindungen ausgeprägt oleophiler Natur und höchstens beschränkter Wasserlöslichkeit zum Einsatz kommen.

15. Ausführungsform nach Ansprüchen 1 bis 14, **dadurch gekennzeichnet, daß** die Ester in Bohrspülungen zum Einsatz kommen, die im Invert-Bohrspülschlamm zusammen mit der geschlossenen Ölphase auf Esterbasis die fein-disperse wäßrige Phase in Mengen von etwa 5 bis 45 Gew.-%, vorzugsweise in Mengen von etwa 5 bis 25 Gew.-% enthalten.

16. Invert-Bohrspülungen, die für eine umweltfreundliche Erschließung von Erdöl- bzw. Erdgasvorkommen geeignet sind und in einer geschlossenen Ölphase eine disperse wäßrige Phase zusammen mit Emulgatoren, Beschwerungsmitteln, fluid-loss-Additiven, Kalk als Alkalireserve, wobei die einzusetzende Kalkmenge auf 1 bis 2 lb/bbl (Kalk/Bohrspülung) beschränkt ist, und gewünschtenfalls weiteren üblichen Zusatzstoffen enthalten, **dadurch gekennzeichnet, daß** die Ölphase bei Raumtemperatur fließfähige und Flammpunkte oberhalb 80 °C aufweisende Ester von C₁₋₅-Monocarbonsäuren mit 1- und/oder mehrfunktionellen Alkoholen, gewünschtenfalls in Abmischung mit anderen Komponenten aus der Klasse der ökologisch verträglichen Verbindungen (nonpolluting oils) enthält.

17. Invert-Bohrspülung nach Anspruch 16, **dadurch gekennzeichnet, daß** Ester von C₂₋₄-Monocarbonsäuren, insbesondere Essigsäureester und monofunktionellen Alkoholen mit wenigstens 8 C-Atomen und/oder entsprechende Ester mit insbesondere niederen 2- bis 4-wertigen Alkoholen in der Ölphase vorliegen.

18. Invert-Bohrspülung nach Ansprüchen 16 und 17, **dadurch gekennzeichnet, daß** die Esteröle der C₁₋₅-Carbonsäuren wenigstens etwa 25 Gew.-%, vorzugsweise wenigstens etwa ein Drittel und insbesondere den Hauptanteil der Ölphase ausmachen.

19. Invert-Bohrspülung nach Ansprüchen 16 bis 18, **dadurch gekennzeichnet, daß** sie eine Plastische Viskosität (PV) im Bereich von etwa 10 bis 60 mPas und eine Fließgrenze (Yield Point YP) im Bereich von etwa 5 bis 40 lb/100 ft² - jeweils bestimmt bei 50 °C - aufweisen.

20. Invert-Bohrspülung nach Ansprüchen 16 bis 19, **dadurch gekennzeichnet, daß** ihr disperser Wasseranteil etwa 5 bis 45 Gew.-%, bevorzugt etwa 10 bis 25 Gew.-% ausmacht und insbesondere Salze von der Art CaCl₂ und/oder KCl gelöst enthält.

21. Invert-Bohrspülung nach Ansprüchen 16 bis 20, **dadurch gekennzeichnet, daß** die Ölphase des Invertschlamms im Temperaturbereich von 0 bis 5 °C eine Brookfield(RVT)-Viskosität unterhalb 50 mPas, vorzugsweise nicht über 40 mPas aufweist.

## Claims

1. The use of esters of C₁₋₅ monocarboxylic acids and mono- and/or polyhydric alcohols, which flow at room temperature and have flash points above 80°C, as the oil phase or as part of the oil phase of invert drilling muds which are suitable for the ecologically safe development of oil and gas occurrences and which, in a continuous oil phase, contain a disperse aqueous phase together with emulsifiers, weighting agents, fluid loss additives, lime as alkali reserve - the quantity of lime to be used being limited to 1 to 2 lb/bbl (lime/drilling fluid) - and, if desired, other standard additives.

2. The use claimed in claim 1, **characterized in that** esters or ester mixtures which are flowable and pumpable even at temperatures of 0 to 5°C are used.

3. The use claimed in claims 1 and 2, **characterized in that** the oil phase is formed by C₁₋₅ monocarboxylic acid esters or mixtures thereof with ecologically safe components (non-polluting oils) which have a Brookfield (RVT) viscosity at 0 to 5°C of not more than 50 mPas, preferably not more than 40 mPas and at most about 30 mPas.

4. The use claimed in claims 1 to 3, **characterized in that** the esters of the C₁₋₅ carboxylic acids used in the drilling mud have solidification values (flow and pour point) below 0°C, preferably below -5°C and, more preferably, below -10°C for flash points of no lower than 90°C and preferably above 100°C.

5. The use claimed in claims 1 to 4, **characterized in that** C₁₋₅ carboxylic acid esters of monohydric alcohols containing at least 6 carbon atoms, preferably at least 8 carbon atoms and/or esters of these acids with 2- to 4-hydric alcohols preferably containing 2 to 6 carbon atoms are used.

6. The use claimed in claims 1 to 5, **characterized in that** esters of glycol and/or a propanediol are used as the esters of polyhydric alcohols.

7. The use claimed in claims 1 to 6, **characterized in that** esters of C₂₋₄ monocarboxylic acids, more especially acetic acid esters, are used.

8. The use claimed in claims 1 to 7, **characterized in that** ester-based mixture components which are ecologically and toxicologically safe, above all inhalation-toxicologically safe under working conditions, even after partial hydrolysis in practical application, are used for mixing with other ester oils.

9. The use claimed in claims 1 to 8, **characterized in that** esters of monohydric alcohols of natural and/or synthetic origin, which have a chain length in the range from C₈ to C₁₅ where predominantly aliphatically saturated alcohols are present or an even greater chain length, for example up to C₂₄, where mono- and/or polyolefinically unsaturated alcohols are present, are used.

10. The use claimed in claims 1 to 9, **characterized in that** ester oils of monohydric C₂₋₁₂ and preferably C₆₋₁₀ alcohols and mono- and/or polyolefinically unsaturated C₁₆₋₂₄ monocarboxylic acids which preferably have solidification values (flow and pour point) below -10°C and preferably below -15°C for flash points above 100°C are used as ester-based mixture components in the continuous oil phase.

11. The use claimed in claim 10, **characterized in that** olefinically unsaturated carboxylic acid esters of which more than 70% by weight, preferably more than 80% by weight and, in particular, more than 90% by weight are derived from olefinically unsaturated C₁₆₋₂₄ carboxylic acids and which have a Brookfield (RVT) viscosity of no more than 55 mPas and preferably no more than 45 mPas, more particularly at temperatures of 0 to 5°C, are used as a mixture component together with the lower carboxylic acid esters.

12. The use claimed in claims 10 and 11, **characterized in that** no more than 35% by weight of the esters of unsaturated monocarboxylic acids used as mixture components are derived from di- and polyolefinically unsaturated acids, of which at least about 60% by weight are monoolefinically unsaturated, and/or of which more than 45% by weight and preferably more than 55% by weight are derived from di- and/or polyolefinically unsaturated acids.

13. The use claimed in claims 1 to 9, **characterized in that** esters of aliphatically saturated monocarboxylic acids containing 6 to 16 carbon atoms esterified with mono- and/or polyhydric alcohols are used as mixture components.

14. The use claimed in claims 1 to 13, **characterized in that** the esters or ester mixtures are used in the invert drilling muds together with amino compounds of pronounced oleophilic character and at most limited solubility in water which are capable of forming salts with free carboxylic acids.

15. The use claimed in claims 1 to 14, **characterized in that** the esters are used in drilling fluids which, in the invert drilling mud, contain the finely disperse aqueous phase in quantities of from about 5 to 45% by weight and preferably in quantities of from about 5 to 25% by weight together with the continuous ester-based oil phase.

16. Invert drilling fluids which are suitable for the ecologically safe development of oil and gas occurrences and which, in a continuous oil phase, contain a disperse aqueous phase together with emulsifiers, weighting agents, fluid loss additives, lime as alkali reserve - the quantity of lime to be used being limited to 1 to lb/bbl (lime/drilling fluid) - and, if desired, other standard additives, **characterized in that** the oil phase contains esters of C₁₋₅ monocarboxylic acids with mono- and/or polyfunctional alcohols which flow at room temperature and have flash points above 80°C, if desired in admixture with other components from the class of ecologically safe compounds (non-polluting oils).

17. An invert drilling fluid as claimed in claim 16, **characterized in that** esters of C₂₋₄ monocarboxylic acids, particularly acetic acid esters, and monohydric alcohols containing at least 8 carbon atoms and/or corresponding esters with, in particular, lower 2- to 4-hydric alcohols are present in the oil phase.

18. An invert drilling fluid as claimed in claims 16 and 17, **characterized in that** the ester oils of the C₁₋₅ carboxylic acids make up at least about 25% by weight, preferably at least about one third and, more preferably, the predominant part of the oil phase.

19. An invert drilling fluid as claimed in claims 16 to 18, **characterized in that** it has a plastic viscosity (PV) in the range from about 10 to 60 mPas and a yield point (YP) in the range from about 5 to 40 lb/100 ft², as determined at 50°C.

20. An invert drilling fluid as claimed in claims 16 to 19, **characterized in that** its disperse water content makes up about 5 to 45% by weight and preferably about 10 to 25% by weight and, in particular, contains dissolved salts of the CaCl₂ and/or KCI type.

21. An invert drilling fluid as claimed in claims 16 to 20, **characterized in that** the oil phase of the invert mud has a Brookfield (RVT) viscosity at 0 to 5°C below 50 mPas and preferably of not more than 40 mPas.

## Revendications

1. Utilisation d'esters à base d'acides mono-carboxyliques en C1-C5 et d'alcools mono- et/ ou polyfonctionnels, aptes à l'écoulement à la température ambiante et possédant des points d'inflammation au-dessus de 80°C, en tant que phase huileuse ou constituant de phase huileuse de boues de forage en émulsion inversée qui conviennent pour une exploitation de gisements de pétrole ou de gaz naturel, qui ménage l'environnement, et qui renferment dans une phase huileuse continue une phase aqueuse dispersée conjointement à des agents émulsionnants, des agents d'alourdissement, des additifs contre les pertes de liquide, de la chaux comme réserve alcaline, pour laquelle la quantité de chaux qui doit être mise en oeuvre est limitée à 1 à 2 lb/bbl (chaux/boue de forage), et si on le désire d'autres additifs usuels.

2. Mode d'exécution selon la revendication 1,
**caractérisé en ce qu'**
on met en oeuvre un ester ou des mélanges d'esters qui sont aptes à l'écoulement et au pompage même dans la plage de températures de 0 à 5°C.

3. Mode d'exécution selon les revendications 1 et 2,
**caractérisé en ce que**
comme phase huileuse on utilise des esters d'acide mono-carboxyliques en C₁-C₅ ou leurs mélanges avec des composants compatibles écologiquement (huiles non polluantes) qui possèdent dans la plage de températures de 0 à 5°C, une viscosité selon Brookfield (RVT) qui n'est pas supérieure à 50 mPas, de préférence qui n'est pas supérieure à 40 mPas et au maximum d'environ 30 mPas.

4. Mode d'exécution selon les revendications 1 à 3,
**caractérisé en ce que**
les esters d'acide carboxylique en C₁-C₅ mis en oeuvre dans les boues de forage possèdent des points de solidification (point d'écoulement et de solidification) en dessous de 0°C de préférence en dessous de -5°C et en particulier en dessous de -10°C et en outre des points d'inflammation qui ne sont pas inférieurs à 90°C, de préférence supérieurs à 100°C.

5. Mode d'exécution selon les revendications 1 à 4,
**caractérisé en ce qu'**
on utilise des esters d'acide carboxylique en C₁-C₅ d'alcools monofonctionnels ayant au moins 6 atomes de carbone, de préférence au moins 8 atomes de carbone et/ou des esters de ces acides avec des alcools di-à tétravalents ayant de préférence de 2 à 6 atomes de carbone.

6. Mode d'exécution selon les revendications 1 à 5,
**caractérisé en ce que**
comme esters d'alcools polyfonctionnels viennent à utilisation ceux du glycol et/ou d'un propane diol.

7. Mode d'exécution selon les revendications 1 à 6,
**caractérisé en ce qu'**
on utilise des esters d'acides mono-carboxyliques ayant de 2 à 4 atomes de carbone, en particulier des esters d'acide acétique.

8. Mode d'exécution selon les revendications 1 à 7,
**caractérisé en ce qu'**
on utilise pour le mélange avec d'autres huiles estérifiées, des composants de mélange à base d'ester qui même après une hydrolyse partielle lors de l'utilisation, sont intensifs d'un point de vue écologique et toxicologique ici en particulier sont inoffensifs d'un point de vue toxicologique par inhalation.

9. Mode d'exécution selon les revendications 1 à 8,
**caractérisé en ce qu'**
on opère avec des esters d'alcools monofonctionnels d'origine naturelle et/ou synthétique, dont la longueur de chaîne en cas de présence d'alcools saturés principalement aliphatiques peut se situer dans la zone de C₈ à C₁₅, dans le cas d'alcools une fois et/ou plusieurs fois non saturés oléfiniquement, cependant aussi à des nombres de carbones supérieurs, par exemple aller jusqu'à environ C₂₄.

10. Mode d'exécution selon les revendications 1 à 9,
**caractérisé en ce que**
comme composants de mélange à base d'ester dans la phase huileuse continue, des huiles estérifiées, à base d'alcools monofonctionnels ayant de 2 à 12 - de préférence de 6 à 10 atomes de carbone et d'acides mono-carboxyliques oléfiniquement 1 fois et/ou plusieurs fois non saturés, ayant de 16 à 24 atomes de carbone, sont présents qui possèdent de préférence de leur côté déjà des valeurs de solidification (point d'écoulement et point de solidification) inférieures à -10°C, de préférence inférieures à -15°C et en outre des points d'inflammation supérieurs à 100°C.

11. Mode d'exécution selon la revendication 10,
**caractérisé en ce que**
conjointement aux esters d'acide carboxylique inférieurs, on met en oeuvre comme composant de mélange des esters d'acide carboxylique oléfiniquement non saturés qui dérivent pour plus de 70 % en poids, de préférence pour plus de 80 % en poids et en particulier pour plus de 90 % en poids d'acides carboxyliques oléfiniquement non saturés de la zone de C₁₆ àC₂₄, et qui possèdent en outre en particulier dans la plage de températures allant de 0 à 5°C, une viscosité Brookfield (RVT) qui n'est pas supérieure à 55 mPas, de préférence qui n'est pas supérieure à 45 mPas.

12. Mode d'exécution selon les revendications 10 et 11,
**caractérisé en ce que**
les esters mis en oeuvre comme composants de mélange dérivent d'acides mono-carboxyliques non saturés pour moins de 35 % en poids et d'acides non saturés plusieurs fois oléfiniquement qui sont non saturés une fois oléfiniquement pour au moins environ 60 % en poids, et/ou d'acides non saturés deux fois et/ou plusieurs fois oléfiniquement pour plus de 45 % en poids, de préférence pour plus de 55 % en poids.

13. Mode d'exécution selon les revendications 1 à 9,
**caractérisé en ce que**
comme composants de mélange on utilise des esters d'acides mono-carboxyliques saturés aliphatiquement ayant de 6 à 16 atomes de carbone qui sont estérifiés par des alcools mono- et/ ou plurivalents.

14. Mode d'exécution selon les revendications 1 à 13,
**caractérisé en ce que**
les esters ou les mélanges d'esters dans les boues de forage inverses viennent à utilisation conjointement avec des composés aminés aptes à la formation de sels avec des acides carboxyliques libres de nature oléophile marquée et de au maximum de solubilité dans l'eau restreinte.

15. Mode d'exécution selon les revendications 1 à 14,
**caractérisé en ce qu'**
on utilise les esters dans les boues de forage qui renferment dans la boue de forage en émulsion inverse, conjointement à la phase huileuse continue, à base d'ester, la phase aqueuse finement disperse en quantités allant d'environ 5 à 45 % en poids, de préférence en quantités allant d'environ 5 à 25 % en poids.

16. Fluides de forage en émulsion inversée qui conviennent pour une exploitation favorable à l'environnement des gisements de pétrole ou de gaz naturels, et qui renferment dans une phase huileuse continue une phase aqueuse dispersée conjointement avec des agents émulsionnants, des agents d'alourdissement, des additifs contre la perte de fluides, de la chaux en tant que réserve alcaline, pour laquelle la quantité de chaux qui doit être utilisée est limitée à 1 à 2 lb/bb (chaux/ boue de forage) et lorsque c'est désiré d'autres additifs usuels,
**caractérisés en ce que**
la phase huileuse renferme des esters d'acide mono-carboxyliques en C₁-C₅ avec des alcools mono- et/ou polyfonctionnels, aptes à l'écoulement à température ambiante et qui possèdent des points d'inflammation supérieurs à 80°C, c'est désiré en mélange avec d'autres composants choisis dans la classe des composés compatibles écologiquement (huiles non polluantes).

17. Fluides de forage en émulsion inversée selon la revendication 16,
**caractérisés en ce que**
des esters d'acide mono-carboxyliques en C₂-C₄ en particulier des esters d'acide acétique et d'alcools monofonctionnels ayant au moins 8 atomes de carbone et/ou les esters correspondants avec en particulier des alcools inférieurs di- à tétravalents, sont présents dans la phase huileuse.

18. Fluides de forage en émulsion inversée selon les revendications 16 et 17,
**caractérisés en ce que**
les huiles estérifiées des acides carboxyliques en C₁-C₅ représentent au moins environ 25 % en poids, de préférence au moins environ un tiers et en particulier la fraction principale de la phase huileuse.

19. Fluides de forage en émulsion inversée selon les revendications 16 à 18,
**caractérisés en ce qu'**
ils possèdent une viscosité plastique (PV) dans la plage d'environ 10 à 60 mPas et une limite de plasticité (point YP) dans la zone d'environ 5 à 40 lb/ 100ft₂, à chaque fois déterminée à 50°C.

20. Fluides de forage en émulsion inversée selon les revendications 16 à 19,
**caractérisés en ce que**
leur fraction aqueuse dispersée représente environ de 5 à 45 % en poids, de préférence environ de 10 à 25 % en poids et en particulier renferme des sels du type CaCl₂ et/ou KCl en solution.

21. Fluides de forage en émulsion inversée selon les revendications 16 à 20,
**caractérisés en ce que**
la phase huileuse de l'émulsion inversée possède dans la plage de températures allant de 0° à 5°C une viscosité Brookfield (RVT) inférieure à 50 mPas, de préférence inférieure à 40 mPas.
